# EUROPÄISCHE PATENTSCHRIFT

(11) **EP 1 719 916 B1**
(45) Veröffentlichungstag und Bekanntmachung des Hinweises auf die Patenterteilung: **23.07.2008**
(21) Anmeldenummer: 05009985.2
(22) Anmeldetag: 07.05.2005
(51) Int. Cl.: F04D 13/06, F04B 17/03

(54) **Pumpenaggregat**
Pump unit
Groupe motopompe

(43) Veröffentlichungstag der Anmeldung: 08.11.2006
(73) Patentinhaber: Grundfos Management A/S, 8850 Bjerringbro (DK)
(72) Erfinder: Sorensen, Jesper, Kok, 8800 Viborg (DK)
(74) Vertreter: Hemmer, Arnd

(56) Entgegenhaltungen:
- EP-A- 0 438 334
- DE-U1- 8 616 971
- GB-A- 2 113 306
- JP-A- 11 289 700
- US-A1- 2004 051 416

## Beschreibung

Die Erfindung betrifft ein Pumpenaggregat.

Moderne Pumpenaggregate, insbesondere in Form von Heizungsumwälzpumpen, weisen häufig elektrische Antriebsmotoren auf, welche als Permanentmagnetmotoren ausgebildet sind. Ein solches Pumpenaggregat ist beispielsweise aus EP 0 438 334 A1 bekannt. Diese Permanentmagnetmotoren weisen einen Rotor auf, welcher mit Permanentmagneten bestückt ist und welcher durch geeignete Bestromung der Statorspulen in Rotation versetzt wird. Die bekannten Rotoren weisen eine zentrale Rotorwelle auf, welche an Lagern, insbesondere Gleitlagern im Statorgehäuse bzw. am Stator drehbar gelagert ist. Der eigentliche Rotor mit den Permanentmagneten ist auf der Rotorwelle fixiert. Dazu können die einzelnen Permanentmagnete beispielsweise in Ausnehmungen eines Blechpaketes angeordnet sein, in dessen zentrale Öffnung die Rotorwelle eingesetzt ist. Alternativ ist es möglich, die gesamte Rotorwelle mit einem magnetisierbaren Material als Rotor zu umgeben, in dem einzelne Magnetpole durch gezielte Magnetisierung ausgebildet sind.

Diese Anordnungen haben zum einen den Nachteil, dass sie, um ausreichend starke Magnetfelder realisieren zu können, einen bestimmten Mindestdurchmesser aufweisen müssen, um ausreichend große Magnete anordnen bzw. ausbilden zu können. Zum anderen ist der Herstellungs- und Montageaufwand für derartige Rotoren recht groß.

Es ist daher Aufgabe der Erfindung, ein Pumpenaggregat zu schaffen, welches aufgrund eines kompakter ausgebildeten Permanentmagnetrotors einen kompakteren Aufbau des Antriebsmotors ermöglicht und/oder eine kostengünstigere Fertigung des Rotors und damit des gesamten Pumpenaggregates ermöglicht.

Diese Aufgabe wird durch ein Pumpenaggregat mit den im Anspruch 1 angegebenen Merkmalen gelöst. Bevorzugte Ausführungsformen ergeben sich aus den zugehörigen Unteransprüchen.

Das erfindungsgemäße Pumpenaggregat weist einen elektrischen Antriebsmotor auf, welcher als Permanentmagnetmotor ausgebildet ist. Entsprechend weist der elektrische Antriebsmotor einen Rotor auf, welcher als Permanentmagnetrotor ausgebildet ist, d. h. der Rotor weist permanentmagnetische Magnetpole auf, welche mit den Spulen des Stators zusammenwirken, so dass durch Bestromung der Spulen der Rotor in Bewegung versetzt wird. Der Rotor ist an einem axialen Ende wie bei bekannten Pumpen mit dem Laufrad des Pumpenaggregates verbunden.

Erfindungsgemäß ist der Rotor so ausgebildet, dass er zumindest in einem Teilbereich seiner axialen Erstreckung wellenlos und vollständig aus einem magnetisierbaren Material ausgebildet ist. Das heißt in einem axialen Teilabschnitt des Rotors, vorzugsweise demjenigen Bereich, welcher im Inneren des Stators angeordnet ist, d. h. von den Statorspulen des Antriebsmotors umgeben ist, ist der Rotor so ausgebildet, dass er keine separate, zentrale Welle aufweist, wie es bei bekannten Rotoren der Fall ist. Erfindungsgemäß ist der Rotor in diesem Bereich vollständig aus magnetisierbarem Material ausgebildet, d. h. auch der Zentralbereich des Rotors, in welchem sonst üblicherweise eine separate Welle angeordnet ist, ist aus magnetisierbarem Material ausgebildet, welches somit insgesamt auch die tragende Funktion des Rotors Übernimmt. In dem magnetisierbaren Material sind die Magnetpole des Rotors durch gezielte Magnetisierung des Materials dauerhaft, d. h. permanentmagnetisch ausgebildet.

Diese erfindungsgemäße Anordnung hat den Vorteil, dass keine aufwändige Montage des Rotors aus einer Vielzahl von Einzelteilen erforderlich ist, da der Rotor zumindest in Teilbereichen einstückig aus magnetisierbarem Material hergestellt, beispielsweise gesintert werden kann. Ferner hat diese Ausgestaltung den Vorteil, dass auch der Zentralbereich des Rotors aus magnetisierbarem Material besteht, so dass entweder bei gleicher Rotorgröße im Rotor mehr magnetisierbares Material zur Verfügung steht oder bei gleicher Magnetisierung der Rotor kleiner ausgebildet werden kann, da auch der Zentralbereich des Rotors als magnetisch wirksames Material genutzt werden kann.

Besonders bevorzugt ist der gesamte Rotor vorzugsweise einstückig aus dem magnetisierbaren Material ausgebildet. Dies ermöglicht eine sehr kostengünstige Fertigung des Rotors, da der gesamte Rotor in einem Arbeitsgang gefertigt werden kann und eine aufwändige Montage des Rotors aus Einzelteilen entfällt. Beispielsweise kann der Rotor aus magnetisierbarem Material verpresst und gesintert werden.

Weiter bevorzugt bildet das magnetisierbare Material auch zumindest eine Lagerfläche des Rotors in radialer und/oder axialer Richtung. So können auch die Lagerflächen des Rotors einstückig mit dem gesamten Rotor ausgebildet werden. Die Lagerflächen bilden mit gegenüberliegenden Lagerflächen am Stator bzw. Statorgehäuse Gleitlager, welche vorzugsweise flüssigkeitsgeschmiert sind, da der Antriebsmotor als Nassläufer ausgebildet ist, wie es z. B. bei Heizungsumwälzpumpen meist der Fall ist. Dadurch, dass keine separaten Lagerelemente mit dem Rotor verbunden werden müssen, wird die Montage und Fertigung des Rotors und somit des gesamten Pumpenaggregates weiter vereinfacht und verbilligt. Das magnetisierbare Material ist vorzugsweise ein gesintertes Material, welches keramische Eigenschaften aufweist, so dass die Lagerflächen eine ausreichende Härte und Verschleißfestigkeit haben.

Zumindest eine Lagerfläche des Rotors kann gemäß einer weiteren Ausführungsform der Erfindung von einer mit dem magnetisierbaren Material verbundenen Lagerbuchse gebildet sein, wobei die Lagerbuchse vorzugsweise mit dem magnetisierbaren Material des Rotors verpresst ist. Diese Ausführungsform ist dann bevorzugt, wenn an das Lagermaterial spezielle Anforderungen gestellt werden, wenn beispielsweise aufgrund der Lagerbelastung ein härteres oder verschleißfesteres Material für die Lagerfläche erforderlich ist. Vorzugsweise ist die Lagerbuchse fest und dauerhaft mit dem Rotor verbunden. Dies kann beispielsweise dadurch erfolgen, dass beim Verpressen des magnetisierbaren Materials in Form des Rotors die Lagerbuchse gleich mit eingepresst wird. So ist es möglich, beim Sintern des Rotors das magnetisierbare Material dauerhaft und fest mit der Lagerbuchse zu verbinden.

In dem Pumpenaggregat sind weiter bevorzugt mit den Lagerflächen des Rotors zusammenwirkende, feststehende Lagerflächen aus einem keramischen Material oder Kohlenstoff angeordnet. Diese Materialien gewährleisten eine geeignete Materialpaarung mit den Lagermaterialien der Lagerflächen des Rotors.

Eine radial wirkende Lagerfläche des Rotors, d. h. eine sich umfänglich um den Außenumfang des Rotors konzentrisch zur Drehachse des Rotors erstreckende Lagerfläche, ist vorzugsweise derart ausgebildet, dass an zumindest einem axialen Ende der Lagerfläche am Außenumfang des Rotors eine ringförmige Vertiefung ausgebildet ist. Diese Vertiefung kann als Einstich oder Einschliff ausgebildet werden und hat den Vorteil, dass ein Eindringen von Verschmutzungen in den Lagerbereich verhindert werden kann, so dass die Haltbarkeit des Rotorlagers erhöht wird.

Gemäß einer weiteren speziellen Ausführungsform der Erfindung kann an zumindest einer axialen Stirnseite des Rotors ein sich von der Stirnseite weg erstreckender Wellenstumpf angeordnet sein. Dieser Wellenstumpf kann zur Lagerung des Rotors und/oder beispielsweise zur Verbindung des Rotors mit dem Laufrad der Pumpe dienen. Es ist möglich, den Rotor an beiden Axialseiten über entsprechende Wellenstümpfe zu lagern. Alternativ ist es möglich, einen solchen Wellenstumpf nur an einer Axialseite auszubilden und an der anderen Axialseite des Rotors Lagerflächen auszubilden, wie sie oben beschrieben wurden. Ferner ist es auch möglich, derartige Lagerflächen und den Wellenstumpf an demselben Axialende des Rotors auszubilden, wobei der Wellenstumpf beispielsweise lediglich der Verbindung des Rotors mit dem Laufrad dient, die Lagerung des Rotors aber durch die oben beschriebenen Lagerflächen erfolgt. Ein solcher Wellenstumpf, welcher aus einem nichtmagnetischen Material bestehen kann, kann in eine entsprechende Ausnehmung an der axialen Stirnfläche des Rotors eingesetzt sein, wobei er vorzugsweise eingepresst ist und so dauerhaft in einer Presspassung gehalten wird. Alternativ ist es möglich, den Wellenstumpf bei der Fertigung des Rotors, d. h. beim Pressen bzw. Sintern des Rotors so mit einzuformen, dass der Wellenstumpf formschlüssig mit dem Rotor bzw. dem magnetisierbaren Material des Rotors verbunden ist.

Das magnetisierbare Material des Rotors ist vorzugsweise ein Ferritmaterial. Die Verwendung von Ferritmaterial hat den Vorteil, dass dieses Material nicht korrosionsanfällig ist, so dass auch bei einem als Nassläufer ausgebildeten Antriebsmotor auf eine Kapselung des Rotors verzichtet werden kann. Darüber hinaus hat das Ferritmaterial derartige keramische Eigenschaften, welche es auch als Lagerwerkstoff geeignet machen, so dass wie oben beschrieben Lagerflächen des Rotors für die Gleitlagerung des Rotors direkt an der Oberfläche des magnetisierbaren Materials ausgebildet werden können, d. h. die Lagerflächen ebenfalls aus diesem Material bestehen.

Vorzugsweise ist in dem Rotor zumindest ein sich radial und/oder axial erstreckender Entlüftungskanal ausgebildet. Ein solcher Kanal kann sich beispielsweise zentral im Rotor durchgehend von einer axialen Stirnseite zu der entgegengesetzten axialen Stirnseite erstrecken. Alternativ kann der Kanal so ausgebildet sein, dass er auch durch sich radial erstreckende Kanäle zum Umfang des Rotors geöffnet ist. Der Entlüftungskanal dient dazu, den Spalt zwischen Rotor und Stator bei Inbetriebnahme des Pumpenaggregates zu entlüften, so dass dieser Spalt dann von dem zu fördernden Fluid, insbesondere Wasser, gefüllt wird.

Alternativ oder zusätzlich kann am Außenumfang des Rotors zumindest eine Entlüftungsnut ausgebildet sein, welche sich vorzugsweise schraubenlinienförmig über den Umfang des Rotors erstreckt. Dabei muss sich die Entlüftungsnut nicht über den gesamten Umfang des Rotors schraubenlinienförmig erstrecken, vielmehr kann sie sich mit entsprechend großer Steigung auch nur über einen Teilbereich des Rotorumfanges erstrecken. Dabei erstreckt sich die Nut vorzugsweise von einem axialen Stirnende zum entgegengesetzten axialen Stirnende des Rotors. So kann die Nut die Entlüftung des gesamten Spaltes zwischen Rotor und Stator bei Inbetriebnahme des Pumpenaggregates gewährleisten.

Der Antriebsmotor des Pumpenaggregates ist als Spaltrohrmotor vorzugsweise mit einem Spaltrohr aus rostfreiem Metall oder Kunststoff ausgebildet, welches den Stator gegenüber dem fluidgefüllten Innenraum des Antriebsmotors abdichtet.

Bevorzugt ist es möglich, dass das Spaltrohr an seinem Innenumfang eine sich vorzugsweise schraubenlinienförmig erstreckende Entlüftungsnut aufweist. Auch diese Nut erstreckt sich weiter bevorzugt von einem axialen Stirnende zum entgegengesetzten axialen Stirnende des Stators bzw. Spaltrohrs, so dass eine Entlüftung des Spaltes zwischen Rotor und Spaltrohr zum Laufrad der Pumpe hin möglich ist. Dabei kann sich die Nut schraubenlinienförmig gewunden beispielsweise über einen Teilbereich des Innenumfanges des Spaltrohres erstrecken. Es ist auch möglich, mehrere über den Umfang verteilte Nuten in dem Spaltrohr auszubilden.

Besonders bevorzugt ist in dem magnetisierbaren Material des Rotors nur der radial einem Stator des Antriebsmotors gegenüberliegende Bereich des Rotors zur Ausbildung der Magnetpole magnetisiert. Das heißt, die Magnetpole, welche zum Betrieb des Motors erforderlich sind, sind nur in dem Bereich des Rotors ausgebildet, welcher dem Innenumfang des Stators gegenüberliegt. Es wird somit nur derjenige Teil des Rotors tatsächlich magnetisiert, welcher durch das Statormagnetfeld beeinflusst wird.

Weiter bevorzugt weist der Rotor, vorzugsweise an einem axialen Ende des Rotors, einen durch Magnetisierung des magnetisierbaren Materials erzeugten Magnetpol auf, welcher Teil eines Drehwinkelsensors ist. Derartige Drehwinkelsensoren werden bei Permanentmagnetmotoren dazu eingesetzt, die Rotorposition zu erfassen, um die Statorspulen in Abhängigkeit der Winkelposition des Rotors bestromen zu können. Dazu kann beispielsweise ein Hall-Sensor eingesetzt werden, welcher das Feld eines Magnetpols im Rotor erfasst. Dazu können die Magnetpole, welche zum Antrieb des Rotors dienen, verwendet werden. Bei dieser Anordnung wird der Hall-Sensor z. B. im Bereich des Spaltrohres angeordnet. Dies ist jedoch nicht immer möglich, so dass es bevorzugt sein kann, den Hall-Sensor im Bereich des axialen Endes des Rotors anzuordnen. Dabei ist es bei dem erfindungsgemäßen einstückigen Rotor aus magnetisierbarem Material sehr einfach, auch in einem Bereich des Rotors, welcher nicht im Inneren des Stators liegt, durch Magnetisierung einen oder mehrere Magnetpole auszubilden, welche lediglich für den Magnetsensor, insbesondere den Hall-Sensor zur Erfassung der Rotor-Winkelposition vorgesehen sind.

Gemäß einer besonderen Ausführungsform weist der Rotor über seine gesamte axiale Länge einen konstanten Außendurchmesser auf.. Das heißt, der Rotor ist zylindrisch mit konstantem Querschnitt ohne Abstufungen am Außenumfang ausgebildet. Dies ermöglicht eine sehr kostengünstige Fertigung des Rotors, da die Außenumfangsfläche des Rotors in einem Arbeitsgang kontinuierlich bearbeitet, beispielsweise geschliffen werden kann. Ferner werden Kerbspannungen im Rotor vermieden.

Neben dem vorangehend beschriebenen Pumpenaggregat ist Gegenstand der Erfindung auch ein Permanentmagnetrotor für ein solches Pumpenaggregat. Erfindungsgemäß ist dieser Permanentmagnetrotor zumindest in einem Teilbereich seiner axialen Erstreckung, vorzugsweise jedoch über seine gesamte axiale Erstreckung wellenlos und vollständig aus einem magnetisierbaren Material ausgebildet. Das heißt, im Inneren des Rotors ist keine separate Rotorwelle vorgesehen, das magnetisierbare Material ist gleichzeitig tragendes Teil und dient der Drehmomentübertragung. Die Magnetpole des Rotors, welche die Permanentmagneten des Permanentmagnetrotors bilden, sind durch Magnetisierung des magnetisierbaren Materials dauerhaft in dem Rotor ausgebildet. Ein solcher Permanentmagnetrotor weist die oben anhand des gesamten Pumpenaggregates beschriebenen Vorteile auf. Ferner kann dieser Permanentmagnetrotor die oben anhand des Pumpenaggregates beschriebenen, bevorzugten Ausgestaltungen aufweisen.

Nachfolgend wird die Erfindung beispielhaft anhand der beigefügten Figuren beschrieben. In diesen zeigt:
- Fig. 1: eine Schnittansicht einer ersten Ausführungsform des erfindungsgemäßen Pumpenaggregates,
- Fig. 2: eine geschnittene Detailansicht des Spaltrohres und des Rotors eines Pumpenaggregates gemäß der Erfindung,
- Fig. 3: eine geschnittene Ansicht des Spaltrohres und des Rotors gemäß einer weiteren Ausführungsform der Erfindung,
- Fig. 4: eine geschnittene Ansicht des Spaltrohres und des Rotors gemäß einer weiteren Ausführungsform der Erfindung,
- Fig. 5: eine geschnittene Ansicht des Spaltrohres und des Rotors gemäß einer weiteren Ausführungsform der Erfindung,
- Fig. 6: eine geschnittene Ansicht des Spaltrohres und des Rotors gemäß einer weiteren Ausführungsform der Erfindung,
- Fig. 7: eine geschnittene Explosionsansicht des Spaltrohres und des Rotors gemäß einer Ausführungsform der Erfindung,
- Fig. 8: eine Schnittansicht eines Spaltrohres und eines Rotors gemäß der Erfindung mit zwei alternativen Rotoren,
- Fig. 9: eine geschnittene Explosionsansicht eines Spaltrohres und des Rotors gemäß einer Ausführungsform der Erfindung mit einem alternativen Rotor,

- Fig. 10: eine geschnittene Explosionsansicht eines Spaltrohres und eines Rotors gemäß einer weiteren Ausführungsform der Erfindung und
- Fig. 11: eine Schnittansicht von Spaltrohr, Rotor und Laufrad gemäß einer weiteren Ausführungsform der Erfindung.

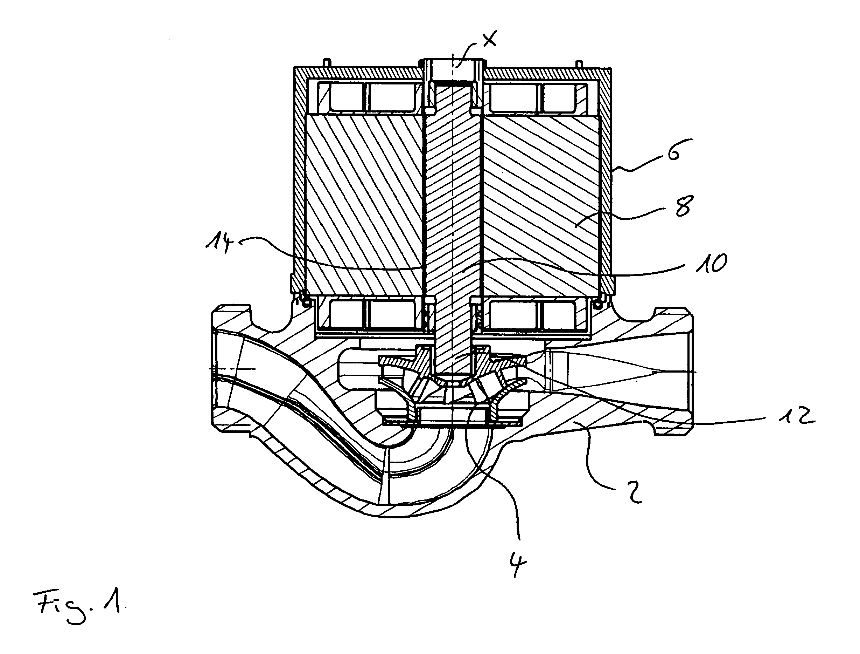

Anhand von Fig. 1, welche eine Querschnittsansicht einer Heizungsumwälzpumpe zeigt, wird der grundsätzliche Aufbau des erfindungsgemäßen Pumpenaggregates bzw. des erfindungsgemäßen Permanentmagnetrotors grundsätzlich erläutert. Als wesentliche Komponenten weist das gezeigte Pumpenaggregat ein Pumpengehäuse 2 mit einem darin angeordneten Laufrad 4 auf. Das Pumpengehäuse 2 ist mit einem Statorgehäuse 6 verbunden, in welchem der Stator 8 des Antriebsmotors des Pumpenaggregates angeordnet ist. Der Stator 8 weist in bekannter Weise mehrere Statorwicklungen auf. Im Stator 8 ist der erfindungsgemäße Rotor 10, welcher als Permanentmagnetrotor ausgebildet ist, angeordnet. Der Rotor 10 erstreckt sich mit seinem ersten axialen Ende 12 in das Pumpengehäuse 2 hinein und ist dort mit dem Laufrad 4 drehfest verbunden.

Der Rotor 10 ist im Inneren des Stators 8 in einem Spaltrohr 14 angeordnet, welches den Stator gegenüber dem Innenraum, in dem der Rotor 10 angeordnet ist und dem Pumpengehäuse 2 abdichtet. Das heißt, der Antriebsmotor ist als Nassläufer ausgebildet, bei dem der Spalt zwischen Rotor 10 und Stator 8 bzw. dem Spaltrohr 14 mit dem zu fördernden Fluid, insbesondere Wasser gefüllt ist.

Erfindungsgemäß ist der Rotor 10 vollständig aus einem magnetisierbaren Material ausgebildet, in dem die permanentmagnetischen Magnetpole des Rotors durch gezielte Magnetisierung ausgebildet sind. Das heißt, der Rotor ist insgesamt im Wesentlichen einstückig ausgebildet und weist keine separate, zentrale Welle auf. So steht vor allem in dem Bereich des Rotors, welcher im Inneren des Stators 8 liegt, der gesamte Rotordurchmesser als magnetisierbares Material zur Verfügung, so dass eine stärkere Magnetisierung des Rotors bei gleichem Rotordurchmesser oder bei gleicher Magnetisierung ein kleinerer Rotordurchmesser erreicht werden kann.

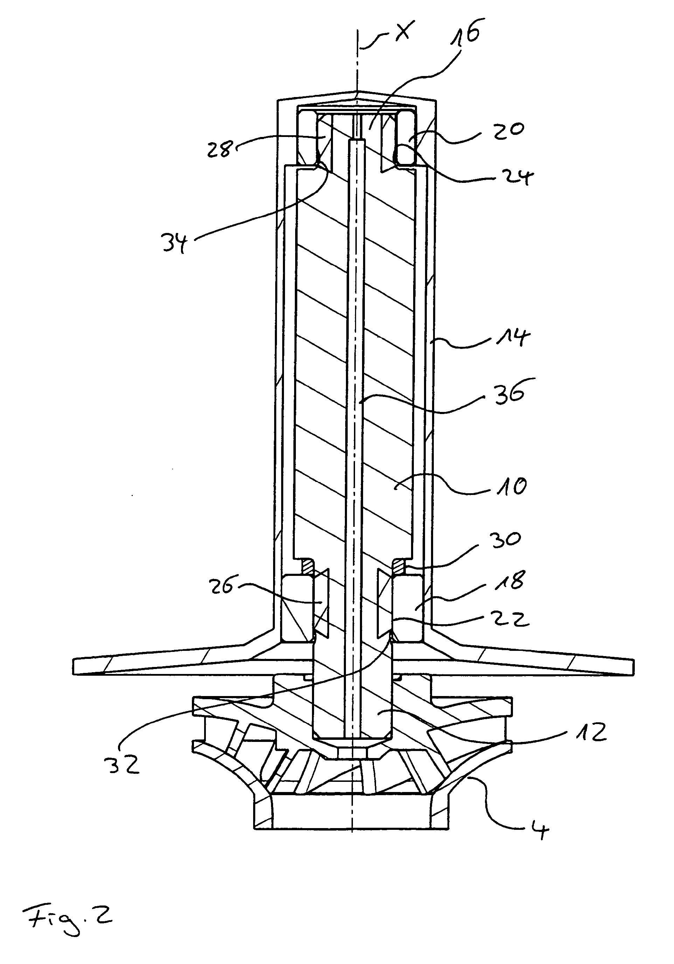

Einzelne Ausführungsformen des erfindungsgemäß aufgebauten Rotors werden anhand der Figuren 2 bis 6 näher beschrieben, welche jeweils nur einen Querschnitt des Spaltrohres 14 mit dem darin angeordneten Rotor 10 und dem an diesem angebrachten Laufrad 4 der Pumpe zeigen.

Gemäß der ersten Ausführungsform der Erfindung, welche in Fig. 2 gezeigt ist; ist der Rotor 10 im Wesentlichen einstückig aus magnetisierbarem Material, beispielsweise einem Ferritmaterial, ausgebildet. Der Rotor ist im Bereich seiner axialen Enden 12 und 16 jeweils verjüngt ausgebildet und dort im Spaltrohr 14 gelagert. Am axialen Ende 12 ist der Rotor ferner, wie bereits anhand von Fig. 1 beschrieben, mit dem Laufrad 4 verbunden. Als Lager sind in bekannter Weise im Inneren des Spaltrohres 14 Lagerbuchsen 18 und 20 angeordnet, welche beispielsweise aus Keramik oder Kohlematerial gebildet sind. Diese Lagerbuchsen 18 und 20 bilden mit gegenüberliegenden Lagerflächen am Außenumfang der axialen Enden 12 und 16 des Rotors 10 Gleitlager, welche den Rotor in radialer und axialer Richtung führen. Die Gleitlager werden dabei von dem zu fördernden Fluid, insbesondere Wasser geschmiert.

In dem in Fig. 2 gezeigten Beispiel sind die Lagerflächen 22 und 24 als in den Rotor 10 integrierte Lagerbuchsen 26 und 28 ausgebildet. Die ringförmigen Lagerbuchsen 26 und 28 weisen dabei in einer sich in Richtung der Rotations- bzw. Längsachse X des Rotors erstreckenden Querschnittsebene eine schwalbenschwanzförmige Querschnittsform auf, welche eine formschlüssige Verbindung mit dem magnetisierbaren Material des Rotors 10 herstellt. Die Lagerbuchsen 26 und 28 werden bei der Fertigung des Rotors 10 aus dem magnetisierbaren Material mit dem magnetisierbaren Material verpresst und/oder gesintert, so dass sie dauerhaft und fest integral mit dem magnetisierbaren Material des Rotors 10 verbunden sind. Die Lagerbuchsen 26 und 28 sind aus einem geeigneten Lagerwerkstoff, beispielsweise aus keramischem Material oder einem kohlenstoffhaltigen Material gefertigt. Diese Ausführungsform mit eingesetzten Lagerbuchsen 26, 28 ist in dem Fall bevorzugt, dass das Lagermaterial andere Eigenschaften als das magnetisierbare Material des Rotors 10 aufweisen muss.

Die beiden Lagerungen an den beiden axialen Enden 12 und 16 des Rotors 10 dienen beide der Radiallagerung. Die Axiallagerung wird im Betrieb im Wesentlichen von der Lagerbuchse 18 übernommen, da die Axialkräfte, welche beim Betrieb der Pumpe auftreten, in Richtung des Pumpengehäuses 2 bzw. des Laufrades 4 gerichtet sind. Als Axiallagerfläche dient dabei die dem Laufrad 4 abgewandte Stirnseite der Lagerbuchse 18, an welcher ein Zwischenring 30 aus einem Elastomer oder Kohlematerial anliegt.

An den Lagerflächen 22 und 24 sind ferner an den dem Laufrad 4 zugewandten Enden jeweils umfängliche Einstiche bzw. Vertiefungen 32 und 34 ausgebildet, welche ringförmige Nuten am Außenumfang des Rotors 10 im Bereich des axialen Endes der Lagerflächen 22 und 24 bilden. Diese Einstiche bzw. Nuten verhindern ein Eindringen von Verschmutzungen, welche in dem zu fördernden Fluid enthalten sein können, in den Lagerspalt zwischen der Lagerfläche 22 und der Lagerbuchse 18 bzw. der Lagerfläche 24 und der Lagerbuchse 20.

Der Rotor 10 gemäß der Ausführungsform, welche in Fig. 2 gezeigt ist, weist ferner einen zentralen Entlüftungskanal 36 auf, welcher sich über die gesamte axiale Länge des Rotors 10 zentral entlang der Rotationsachse X erstreckt und zu den beiden axialen Stirnseiten des Rotors 10 hin geöffnet ist. Der Entlüftungskanal 36 mündet an der Stirnseite an dem axialen Ende 12 des Rotors 10 zentral im Laufrad 4 und ist somit dem Saugmund der Pumpe zugewandt. Auf diese Weise kann der Kanal 36 beim Anlaufen der Pumpe den dem Laufrad 4 abgewandten Bereich zwischen Rotor 10 und Spaltrohr 14 entlüften, so dass der Spalt zwischen Rotor 10 und Spaltrohr 14 vollständig mit dem zu fördernden Fluid gefüllt werden kann.

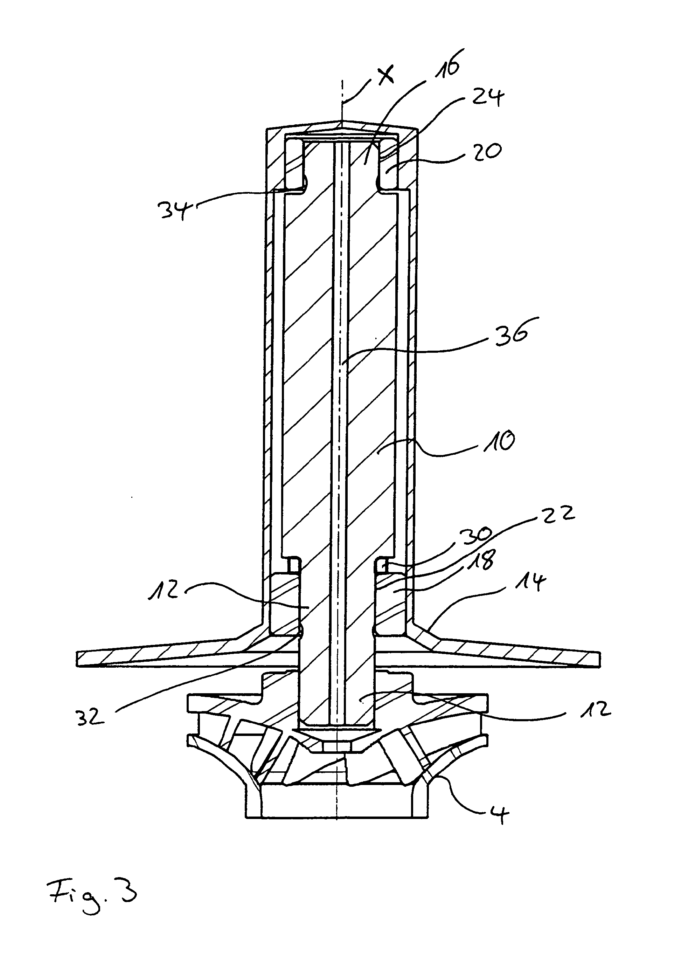

Fig. 3 zeigt in einer Ansicht entsprechend der in Fig. 2 gezeigten Ansicht eine zweite Ausführungsform der Erfindung. Diese Ausführungsform unterscheidet sich von der in Fig. 2 gezeigten Ausführungsform dadurch, dass auf die Lagerbuchsen 26 und 28 im Rotor 10 verzichtet ist. Dies ist möglich, wenn das magnetisierbare Material des Rotors 10 selbst Eigenschaften aufweist, welche es als Lagermaterial für die Lagerflächen 22 und 24 geeignet machen. Falls erforderlich, kann im Bereich der Lagerflächen 22 und 24 eine Oberflächenbehandlung des magnetisierbaren Materials des Rotors 10 vorgenommen werden, um die erforderliche Härte bzw. Festigkeit des Materials sowie die erforderlichen Gleiteigenschaften zu erzeugen. Geeignet ist beispielsweise ein Ferritmaterial. Ein solches Ferritmaterial weist im Wesentlichen die gleichen Eigenschaften wie ein Keramikmaterial auf, so dass es direkt als Lagerwerkstoff geeignet ist. Ferner hat Ferrit noch den Vorteil, dass es unempfindlich gegen Wasser ist und daher in einem Nassläufer ohne zusätzliche Kapselung am Außenumfang des Rotors 10 eingesetzt werden kann. Die Lagerflächen 22 und 24 wirken, wie anhand von Fig. 2 beschrieben, mit den Lagerbuchsen 18 und 20 im Spaltrohr 14 zusammen. Alle übrigen Merkmale der Ausführungsform gemäß Fig. 3 entsprechen den bereits anhand von Fig. 2 beschriebenen Merkmalen.

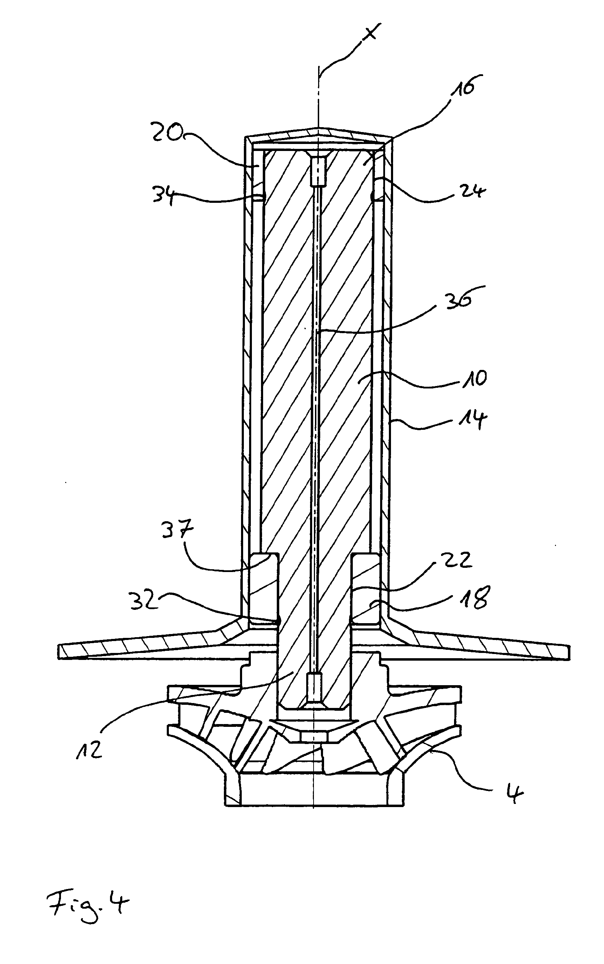

Eine weitere Ausführungsform des erfindungsgemäßen Rotors 10 wird anhand von Fig. 4 beschrieben. Die Ausführungsform gemäß Fig. 4 unterscheidet sich von der Ausführungsform gemäß Fig. 3 dadurch, dass an dem axialen Ende 16 des Rotors dieser nicht abgestuft ausgebildet ist, sondern einen konstanten Querschnitt aufweist, welcher dem Querschnitt des Rotors 10 in dessen Mittelbereich, d. h. dem im Inneren des Stators 8 gelegenen Bereich entspricht. Lediglich das axiale Ende 12, welches dem Laufrad 4 zugewandt ist, ist wie bei den vorangehend beschriebenen Ausführungsformen abgestuft ausgebildet. Der Verzicht auf Abstufungen bzw. Absätze des Rotors 10 in axialer Richtung ermöglicht eine einfachere Oberflächenbearbeitung des Außenumfanges des Rotors 10 und somit eine einfachere Fertigung des gesamten Rotors 10.

Ein weiterer Unterschied der Ausführungsform gemäß Fig. 4 zu den vorangehend beschriebenen Ausführungsformen liegt darin, dass auf den Zwischenring 30 verzichtet ist, d. h. das Axiallager wird bei der Ausführungsform gemäß Fig. 4 durch direkte Anlage des Rotors 10 an der dem Laufrad 4 abgewandten axialen Stirnseite der Lagerbuchse 18 gebildet. Dabei kommt der Rotor 10 mit einer durch die Verjüngung des Rotordurchmessers zum axialen Ende 12 hin gebildete axiale Anlageschulter 37 an der Lagerbuchse 18 zur Anlage. Die übrigen in Fig. 4 gezeigten Merkmale entsprechen den anhand der Figuren 2 und 3 erläuterten Merkmalen.

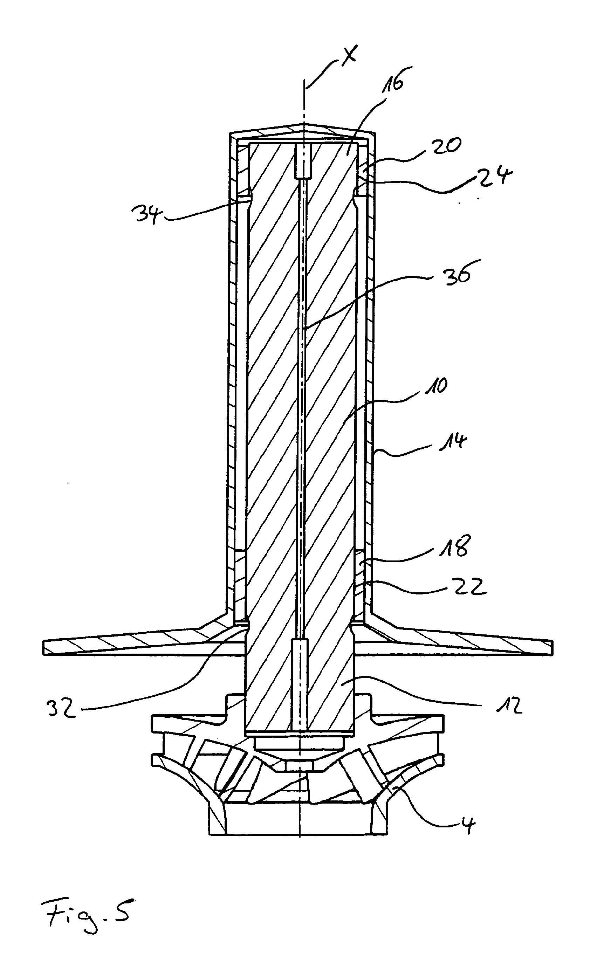

Fig. 5 zeigt eine weitere Ausführungsform des erfindungsgemäßen Rotors 10, welcher über seine gesamte axiale Länge mit konstantem Querschnitt bzw. Durchmesser ausgebildet ist, d. h. im Unterschied zu der Ausführungsform gemäß Fig. 4 ist bei der Ausführungsform gemäß Fig. 5 auch auf die Abstufung zum axialen Ende 12, welches dem Laufrad 4 zugewandt ist, verzichtet. Eine solche Ausgestaltung des Rotors ermöglicht eine besonders einfache Bearbeitung des Außenumfangs des Rotors, da der Rotor beispielsweise in einem Durchlaufverfahren an seinem Außenumfang geschliffen werden kann.

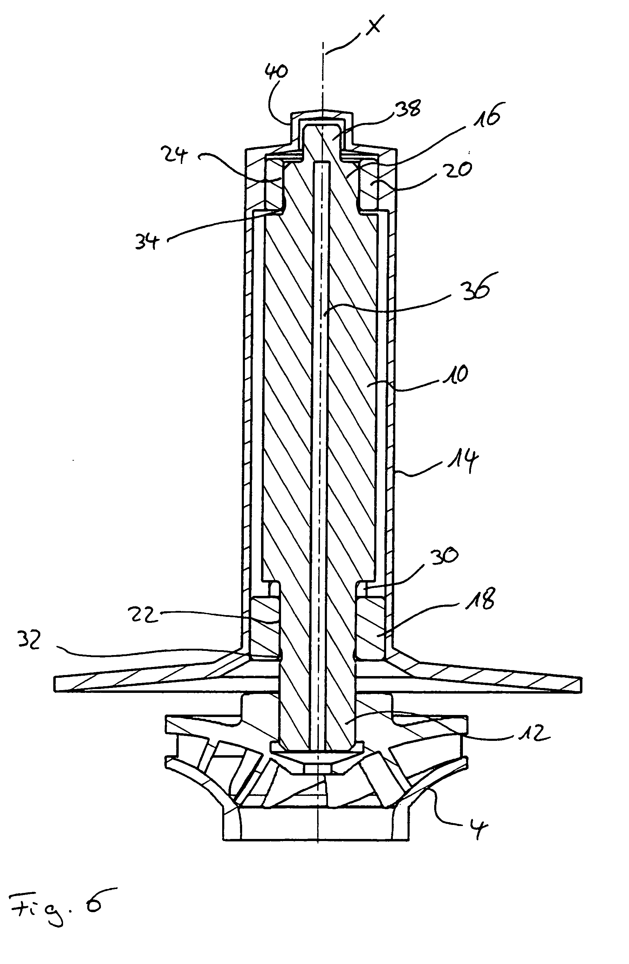

Fig. 6 zeigt eine weitere Ausführungsform des erfindungsgemäßen Rotors. Dieser Rotor entspricht im Wesentlichen dem in Fig. 3 gezeigten Rotor mit dem Unterschied, dass der Rotor 10 an seinem axialen Ende 16, d. h. dem dem Laufrad 4 abgewandten Ende, eine axiale Verlängerung 38 aufweist. Die axiale Verlängerung 38, welche sich konzentrisch zur Rotationsachse X erstreckt, ragt in eine axialseitigen Ausstülpung 40 des Spaltrohres 14 hinein. Die axiale Verlängerung 38 dient dazu, mit einem Magnetfeldsensor, beispielsweise einem Hall-Sensor zusammenzuwirken, welcher am Außenumfang der Ausstülpung 40, d. h. außerhalb des Spaitrohres 14 angeordnet werden kann. In der axialen Verlängerung 38 können durch Magnetisierung des magnetisierbaren Materials, aus welchem der gesamte Rotor 10 besteht, ein oder mehrere Magnetpole ausgebildet werden, welche von einem außerhalb des Spaltrohres 14 im Bereich der Ausstülpung 40 angeordneten Magnetfeldsensor erfasst werden können. Auf dieses Weise kann die Winkelposition des Rotors erfasst werden, was zur Bestromung der Statorspulen erforderlich ist. Diese Ausführungsform eignet sich für Anwendungsfälle, in welchen ein entsprechender Sensor nicht im Bereich der Statorspulen angeordnet werden kann, um die in diesem Bereich ausgebildeten Magnetpole des Rotors 10 zu erfassen.

Bei der in Fig. 6 gezeigten Ausführungsform ist der Entlüftungskanal 36 nicht bis zu der axialen Stirnseite am axialen Ende 16 hin ausgebildet. Bei dieser Ausführungsform sind vielmehr sich radial erstreckende Kanäle vorgesehen, welche sich zum Außenumfang des Rotors 10 hin öffnen. Diese Kanäle sind in Fig. 6 nicht gezeigt und werden anhand der nachfolgenden Figuren noch erläutert werden.

Die übrigen in Fig. 6 gezeigten Merkmale entsprechen den anhand der Figuren 2 bis 5 erläuterten Merkmalen.

Die in den Figuren 2 bis 6 gezeigten Merkmale und Ausführungsformen des erfindungsgemäßen Rotors 10 können auch in anderer Weise miteinander kombiniert werden. So ist es beispielsweise möglich, auch bei einem Rotor mit konstantem Durchmesser über die gesamte axiale Länge, wie er beispielsweise in Fig. 5 gezeigt ist, Lagerbuchsen 26 und 28 im Rotor 10 anzuordnen. Ferner lässt sich auch bei den in den Figuren 2 bis 5 gezeigten Ausführungsformen eine axiale Verlängerung 38 vorsehen, wie sie in Fig. 6 gezeigt ist. Auch die Anordnung des Zwischenringes 30 ist bei den Ausführungsformen, bei welchen der Zwischenring 30 nicht gezeigt ist, möglich. Ferner ist es möglich, nur eine der Lagerbuchsen 26 und 28 vorzusehen, beispielsweise in dem dem Laufrad 4 zugewandten Lager der Rotors 10. Die andere Lagerfläche 24 kann durch das magnetisierbare Material des Rotors 10 gebildet werden.

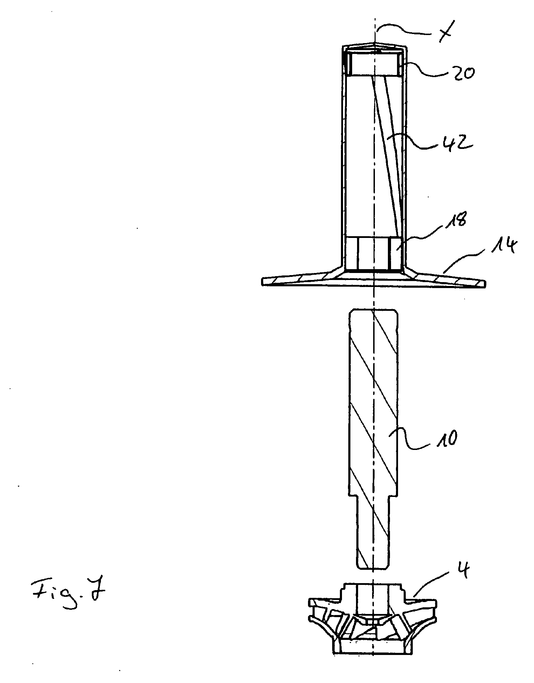

Anhand der Figuren 7 bis 10, welche Detailansichten von Rotoren 10, wie sie anhand der Figuren 2 bis 6 beschrieben worden sind, zeigen, werden nachfolgend unterschiedliche Ausbildungen von Entlüftungskanälen und Entlüftungsnuten zur Entlüftung des Rotorspaltes zwischen Rotor 10 und Spaltrohr 14 erläutert.

Fig. 7 zeigt ein Spaltrohr 14 mit Rotor 10 und Laufrad 4 gemäß der in Fig. 4 gezeigten Ausführungsform der Erfindung. Im Unterschied zu dem in Fig. 4 gezeigten Rotor 10 weist der Rotor 10 gemäß Fig. 7 keinen zentralen Entlüftungskanal 36 auf. Stattdessen sind am Innenumfang des Spaltrohres 4 sich schraubenlinienförmig erstreckende Entlüftungsnuten 42 ausgebildet, von welchen in Fig. 7 nur eine gezeigt ist. Vorzugsweise sind zwei Entlüftungsnuten 42 an diametral entgegengesetzten Seiten des Spaltrohres 14 ausgebildet. Die Entlüftungsnuten 42 erstrecken sich über die axiale Länge in Richtung der Rotationsachse X des Spaltrohres 14 und sind dabei über den Umfang gewunden, so dass ein schraubenlinienförmiger bzw. schräger Verlauf entsteht, wobei sich die Nuten 42 nicht über den gesamten Innenumfang des Spaltrohres 14 erstrecken müssen. Die Entlüftungsnuten 42 dienen wie auch der vorangehend beschriebene Entlüftungskanal 36 dazu, bei Inbetriebnahme des Pumpenaggregates den Spalt zwischen Spaltrohr 14 und Rotor 10 zu entlüften und diesen Bereich vollständig mit dem zu fördernden Fluid, beispielsweise Wasser, zu füllen, so dass der Motor als Nassläufer läuft.

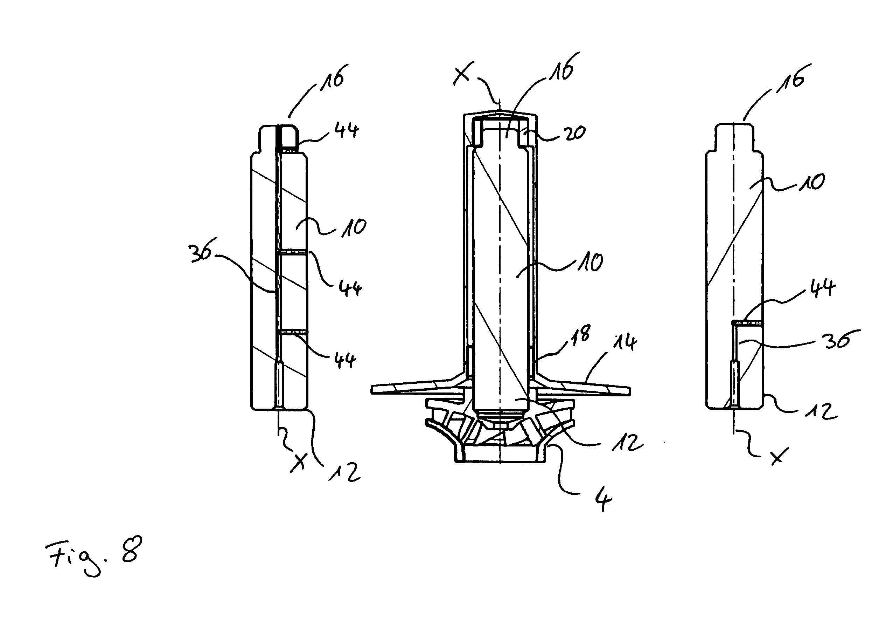

Fig. 8 zeigt eine weitere Ausführungsform des erfindungsgemäßen Rotors 10. In der Mitte in Fig. 8 ist die Anordnung des Rotors 10 im Spaltrohr 14 mit dem Laufrad 4 gezeigt. Dabei entspricht die Anordnung im Wesentlichen der anhand der Figuren 3 bis 6 beschriebenen Ausgestaltung, nur dass im Unterschied zu der Ausführungsform gemäß Fig. 4 nicht das axiale Ende 12 im Durchmesser verjüngt ausgebildet ist, sondern das dem Laufrad 4 abgewandte axiale Ende 16. Links und rechts in Fig. 8 sind zwei unterschiedliche Rotoren 10 mit unterschiedlicher Ausgestaltung der Entlüftungskanäle 36 dargestellt. Bei dem links in Fig. 8 gezeigten Beispiel erstreckt sich der Entlüftungskanal 36 von dem axialen Ende 12 zu dem axialen Ende 16 des Rotors 10 hin, d. h. von Stirnseite zu Stirnseite in Richtung der Rotationsachse X. Zusätzlich erstrecken sich ausgehend von dem Kanal 36 Kanäle 44 in radialer Richtung zur Umfangsfläche des Rotors 10 hin.

Bei dem in Fig. 8 rechts gezeigten Beispiel erstreckt sich der Kanal 36 in Richtung der Rotationsachse X ausgehend von der Stirnseite an dem axialen Ende 12 nur bis in den Zentralbereich des Rotors 10 hinein, nicht jedoch bis zum axialen Ende 16 hin. Von dem dem axialen Ende 12 abgewandten Ende des Entlüftungskanals 36 aus erstreckt sich ein Kanal 44 in radialer Richtung zur Umfangsfläche des Rotors 10. Auch wenn in Fig. 8 die sich radial erstreckenden Kanäle 44 nur zu einer Seite hin gezeigt sind, ist es möglich, mehrere Kanäle 44 anzuordnen, welche sich in unterschiedlichen radialen Richtungen, d. h. in Winkeln zueinander erstrecken.

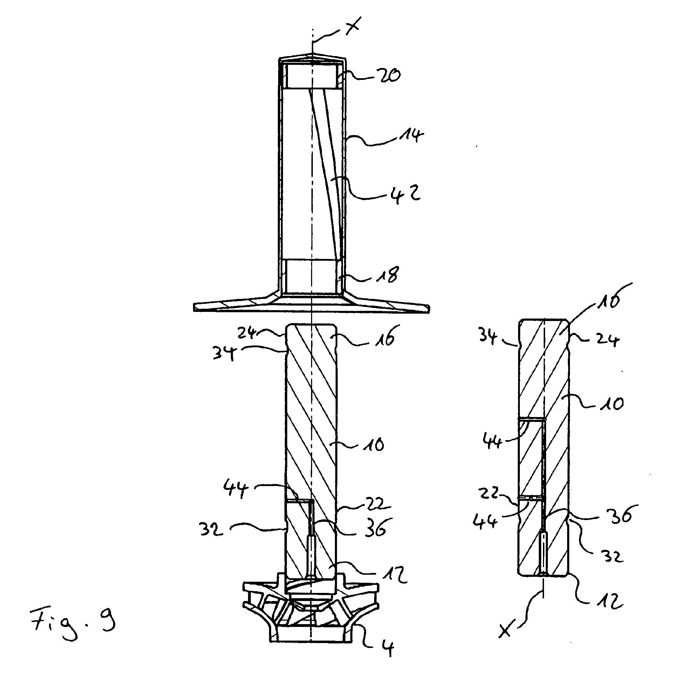

Fig. 9 zeigt einen Rotor 10 mit Laufrad 4 und Spaltrohr 14 sowie rechts in Fig. 9 eine alternative Ausgestaltung des Rotors 10. Grundsätzlich entspricht der in Fig. 9 gezeigte Rotor dem anhand von Fig. 5 beschriebenen Rotor mit dem Unterschied, dass der Entlüftungskanal 36 in dem Rotor 10 im Wesentlichen den anhand von Fig. 8 beschriebenen Verlauf aufweist. Der links in Fig. 9 gezeigte Verlauf des Entlüftungskanals 36 mit dem sich radial erstreckenden Kanal 44 entspricht dem rechts in Fig. 8 dargestellten Kanalverlauf. Rechts in Fig. 9 ist eine Ausführungsform gezeigt, bei welcher sich der Entlüftungskanal 36 in Richtung der Rotationsachse X von der Stirnseite am axialen Ende 12 des Rotors 10 in das Innere des Rotors 10 hinein erstreckt, nicht jedoch bis zur entgegengesetzten Stirnseite am axialen Ende 16. Ausgehend von dem zentralen Kanal 36 erstrecken sich Kanäle 44 in axialer Richtung X beabstandet radial nach außen zum Außenumfang des Rotors 10.

Zusätzlich ist bei der Ausführungsform gemäß Fig. 9 in dem Spaltrohr 14 eine Entlüftungsnut 42 oder sind mehrere Entlüftungsnuten 42 ausgebildet, wie anhand von Fig. 7 beschrieben.

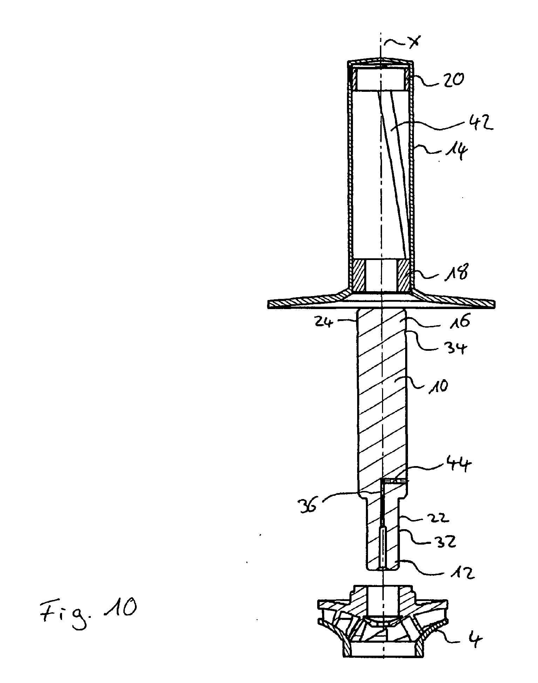

Fig. 10 zeigt ein Spaltrohr 14 mit Rotor 10 und Laufrad 4 entsprechend der in Fig. 9 links gezeigten Ausführungsform, wobei jedoch der Rotor 10 bezüglich seiner Abstufungen am Außenumfang entsprechend der anhand von Fig. 4 beschriebenen Ausführungsform ausgebildet ist.

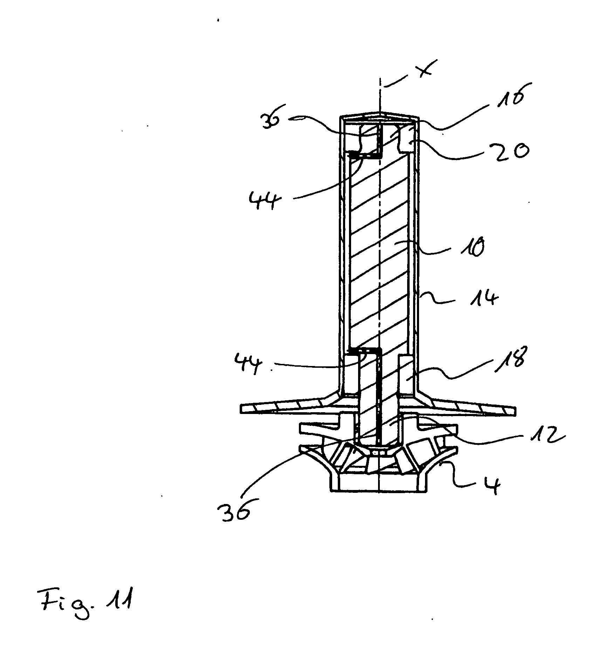

Fig. 11 zeigt eine weitere Ausführungsform der Anordnung der Kanäle 36 und 44, wobei die Ausgestaltung des Rotors 10 grundsätzlich dem anhand von Fig. 3 beschriebenen Aufbau entspricht, jedoch der Zwischenring 10 ähnlich der in Fig. 4 gezeigten Ausführungsform weggelassen ist. Bei der Ausführungsform gemäß Fig. 11 erstreckt sich jeweils ein zentraler Kanal 36 in Richtung der Rotationsachse X von den Stirnseiten an den axialen Enden 12 und 16 her in das Innere des Rotors 10 hinein. Dabei erstrecken sich die Kanäle 36 jedoch nur bis an die Grenze desjenigen Bereiches des Rotors 10, welcher in dem Stator 8 angeordnet wird, d. h. bis zu der Grenze des Bereiches, in dem durch Magnetisierung die Magnetpole des Rotors 10 ausgebildet sind. Von den im Inneren des Rotors 10 gelegenen Enden der Kanäle 36 erstrecken sich jeweils Kanäle 44 in radialer Richtung nach außen zu der Umfangsfläche des Rotors 10 hin und münden in den Spalt zwischen Rotor 10 und Spaltrohr 14. Mittels dieser Kanäle 36 und 44 kann bei Inbetriebnahme des Antriebsmotors der Spalt zwischen Rotor 10 und Spaltrohr 14 und auch der Spalt am axialen Ende 16 zwischen Rotor 10 und Spaltrohr 14 vollständig entlüftet werden. In dem Bereich des Rotors 10, welcher im Stator 8 liegt und magnetisch wirksam ist, ist der Rotor 10 jedoch frei von Kanälen, so dass der Rotor hier massiv aus dem magnetisierbaren Material ausgebildet ist. So ist in diesem Bereich der gesamte Rotor 10 bzw. dessen gesamtes Volumen magnetisierbar, so dass die maximal mögliche Stärke der Magnetfelder der Magnetpole im Rotor 10 bei dem zur Verfügung stehenden Rotorvolumen erreicht werden kann.

Bezüglich der anhand der Figuren 7 bis 11 beschriebenen Verläufe der Entlüftungskanäle 36 und 44 sowie der Entlüftungsnuten 42 am Spaltrohr 14 ist zu bemerken, dass diese Ausführungsformen auch mit anderen als den gezeigten Gestaltungen des Rotors 10 kombiniert werden können. So lassen sich die Verläufe der Kanäle und Nuten mit allen übrigen Merkmalen gemäß der unterschiedlichen Ausführungsformen des Rotors 10, wie sie beispielsweise anhand der Figuren 2 bis 6 erläutert worden sind, kombinieren. Die Nut- bzw. Kanalverläufe lassen sich mit den unterschiedlichen Lagerausgestaltungen und Ausgestaltungen des Rotoraußenumfanges kombinieren.

Zusätzlich oder alternativ zu der schräg verlaufenden Nut am Innenumfang des Spaltrohres 14 kann auch eine entsprechende Nut am Außenumfang des Rotors 10 ausgebildet sein. Eine solche Nut kann sich entweder parallel zur Rotationsachse X oder auch schraubenlinienförmig gewunden wie die Nut 42 erstrecken. Bei Anordnung der Nuten am Rotor sollten jedoch vorzugsweise mehrere Nuten gleichmäßig verteilt am Umfang des Rotors angeordnet werden, um Unwuchten zu vermeiden.

Die Nuten am Außenumfang des Rotors 10 oder am Innenumfang des Spaltrohres 14 verlaufen, wie ausgeführt, gemäß einer bevorzugten Ausführungsform schraubenförmig geneigt, dabei können die Nuten entweder links herum oder rechts herum geneigt verlaufen. Wenn mehrere Nuten an dem Rotor 10 oder dem Spaltrohr 14 vorgesehen sind, können diese Nuten entweder in der gleichen Richtung oder auch in unterschiedlichen, d.h. entgegengesetzten Richtungen geneigt verlaufen, so dass beispielsweise eine Nut ein Linksgewinde und die andere Nut ein Rechtsgewinde beschreibt. Dadurch kann die Entlüftung weiter verbessert werden.

### Bezugszeichenliste

- 2 -: Pumpengehäuse
- 4 -: Laufrad
- 6 -: Statorgehäuse
- 8 -: Stator
- 10 -: Rotor
- 12 -: axiales Ende
- 14 -: Spaltrohr
- 16 -: axiales Ende
- 18, 20 -: Lagerbuchsen
- 22, 24 -: Lagerflächen
- 26, 28 -: Lagerbuchsen
- 30 -: Zwischenring
- 32; 34 -: Einstiche
- 36 -: Entlüftungskanal
- 37 -: Anlageschulter
- 38 -: axiale Verlängerung
- 40 -: Ausstülpung
- 42 -: Entlüftungsnuten
- 44 -: Kanäle

## Patentansprüche

1. Pumpenaggregat mit einem als Spaltrohr ausgebildeten elektrischen Antriebsmotor, welcher einen als Permanentmagnetrotor ausgebildeten Rotor (10) aufweist, welcher an einem axialen Ende mit einem Laufrad des Pumpenaggregats verbunden ist, **dadurch gekennzeichnet, dass** der Rotor (10) zumindest in einem Teilbereich seiner axialen Erstreckung (X) wellenlos und vollständig aus einem magnetisierbaren Material ausgebildet ist und die Magnetpole des Rotors (10) durch Magnetisierung des magnetisierbaren Materials ausgebildet sind.

2. Pumpenaggregat nach Anspruch 1, **dadurch gekennzeichnet, dass** der gesamte Rotor (10) vorzugsweise einstückig aus einem magnetisierbaren Material ausgebildet ist.

3. Pumpenaggregat nach Anspruch 1 oder 2, **dadurch gekennzeichnet, dass** das magnetisierbare Material zumindest eine Lagerfläche (22, 24) des Rotors (10) in radialer und/oder axialer Richtung bildet.

4. Pumpenaggregat nach einem der Ansprüche 1 bis 3, **dadurch gekennzeichnet, dass** zumindest eine Lagerfläche (22, 24) des Rotors (10) von einer mit dem magnetisierbaren Material verbundenen Lagerbuchse (26, 28) gebildet ist, wobei die Lagerbuchse (26, 28) vorzugsweise mit dem magnetisierbaren Material des Rotors (10) verpresst ist.

5. Pumpenaggregat nach Anspruch 3 oder 4, **dadurch gekennzeichnet, dass** in dem Pumpenaggregat mit den Lagerflächen (22, 24) des Rotors (10) zusammenwirkende feststehende Lagerflächen (18, 20) aus einem keramischen Material oder Kohlenstoff angeordnet sind.

6. Pumpenaggregat nach einem der Ansprüche 3 bis 5, **dadurch gekennzeichnet, dass** eine radial wirkende Lagerfläche (22, 24) des Rotors derart ausgebildet ist, dass an zumindest einem axialen Ende der Lagerfläche (22, 24) am Außenumfang des Rotors (10) eine ringförmige Vertiefung (32, 34) ausgebildet ist.

7. Pumpenaggregat nach einem der vorangehenden Ansprüche, **dadurch gekennzeichnet, dass** an zumindest einer axialen Stirnseite des Rotors (10) ein sich von der Stirnseite wegerstreckender Wellenstumpf angeordnet ist.

8. Pumpenaggregat nach einem der vorangehenden Ansprüche, **dadurch gekennzeichnet, dass** das magnetisierbare Material ein Ferritmaterial ist.

9. Pumpenaggregat nach einem der vorangehenden Ansprüche, **dadurch gekennzeichnet, dass** in dem Rotor (10) zumindest ein sich radial und/oder axial erstreckender Entlüftungskanal (36, 44) ausgebildet ist.

10. Pumpenaggregat nach einem der vorangehenden Ansprüche, **dadurch gekennzeichnet, dass** am Außenumfang des Rotors (10) zumindest eine Entlüftungsnut ausgebildet ist, welche sich vorzugsweise schraubenlinienförmig über den Umfang des Rotors erstreckt.

11. Pumpenaggregat nach einem der vorangehenden Ansprüche, **dadurch gekennzeichnet, dass** der Antriebsmotor mit einem Spaltrohr (14) aus rostfreiem Metall oder Kunststoff ausgebildet ist.

12. Pumpenaggregat nach Anspruch 11, **dadurch gekennzeichnet, dass** das Spaltrohr (14) an seinem Innenumfang eine sich vorzugsweise schraubenlinienförmig erstreckende Entlüftungsnut (42) aufweist.

13. Pumpenaggregat nach einem der vorangehenden Ansprüche, **dadurch gekennzeichnet, dass** nur der radial einem Stator (8) des Antriebsmotors gegenüberliegende Bereich des Rotors (10) die durch Magnetisierung ausgebildeten Magnetpole aufweist.

14. Pumpenaggregat nach einem der vorangehenden Ansprüche, **dadurch gekennzeichnet, dass** der Rotor (10) vorzugsweise an einem axialen Ende (16) einen durch Magnetisierung des magnetisierbaren Materials erzeugten Magnetpol eines Drehwinkelsensors aufweist.

15. Pumpenaggregat nach einem der vorangehenden Ansprüche, **dadurch gekennzeichnet, dass** der Rotor (10) über seine gesamte axiale Länge einen konstanten Außendurchmesser aufweist.

## Claims

1. A pump assembly with an electric drive motor which is designed as a can and which comprises a rotor (10) designed as a permanent magnet rotor, which at one axial end is connected to an impeller of the pump assembly, **characterised in that** the rotor (10) at least in a part region of its axial extension (X) is designed in a shaftless manner and completely of a magnetisable material, and the magnet poles of the rotor (10) are formed by magnetisation of the magnetisable material.

2. A pump assembly according to claim 1, **characterised in that** the complete rotor (10) is preferably formed as one piece from a magnetisable material.

3. A pump assembly according to claim 1 or 2, **characterised in that** the magnetisable material forms at least one bearing surface (22, 24) of the rotor (10) in the radial and/or axial direction.

4. A pump assembly according to one of the claims 1 to 3, **characterised in that** at least one bearing surface (22, 24) of the rotor (10) is formed by a bearing bush (26, 28) connected to the magnetisable material, wherein the bearing bush (26, 28) is preferably pressed with the magnetisable material of the rotor (10).

5. A pump assembly according to claim 3 or 4, **characterised in that** stationary bearing surfaces (18, 20) of a ceramic material or carbon, which cooperate with the bearing surfaces (22, 24) of the rotor (10), are arranged in the pump assembly.

6. A pump assembly according to one of the claims 3 to 5, **characterised in that** a radially acting bearing surface (22, 24) of the rotor is designed in a manner such that an annular recess (32, 34) is formed on at least one axial end of the bearing surface (22, 24) on the outer periphery of the rotor (10).

7. A pump assembly according to one of the preceding claims, **characterised in that** a shaft stub is arranged on at least one axial end-side of the rotor (10), said shaft stub extending away from the end-side.

8. A pump assembly according to one of the preceding claims, **characterised in that** the magnetisable material is a ferrite material.

9. A pump assembly according to one of the preceding claims, wherein at least one radially and/or axially extending bleed channel (36, 44) is formed in the rotor (10).

10. A pump assembly according to one of the preceding claims, **characterised in that** at least one bleed groove is formed on the outer periphery of the rotor (10), and extends preferably in a helical manner over the periphery of the rotor.

11. A pump assembly according to one of the preceding claims, **characterised in that** the drive motor is designed with a can (14) of stainless metal or plastic.

12. A pump assembly according to claim 11, **characterised in that** the can (14) on its inner periphery comprises a bleed groove (42) extending preferably in a helical manner.

13. A pump assembly according to one of the preceding claims, **characterised in that** only the region of the rotor (10) lying radially opposite a stator (8) of the drive motor has the magnet poles formed by magnetisation.

14. A pump assembly according to one of the preceding claims, **characterised in that** the rotor (10), preferably at an axial end (16), comprises a magnet pole of a rotation angle sensor, which is produced by magnetization of the magnetisable material.

15. A pump assembly according to one of the preceding claims, **characterised in that** the rotor (10) has a constant outer diameter over its entire axial length.

## Revendications

1. Groupe motopompe comprenant un moteur électrique d'entraînement conçu en moteur à gaine, qui présente un rotor (10) réalisé sous forme d'un rotor à aimants permanents, lequel est relié, à une extrémité axiale, à une roue à aubes du groupe motopompe, **caractérisé en ce que** le rotor (10), au moins sur une partie de sa dimension axiale (X), est sans arbre et est réalisé totalement en un matériau magnétisable, et les pôles magnétiques du rotor (10) sont réalisés par magnétisation du matériau magnétisable.

2. Groupe motopompe selon la revendication 1, **caractérisé en ce que** le rotor (10), en entier, est, de préférence, réalisé en une seule pièce, en un matériau magnétisable.

3. Groupe motopompe selon la revendication 1 ou 2, **caractérisé en ce que** le matériau magnétisable forme au moins une surface de palier (22, 24) du rotor (10), en direction radiale et/ou axiale.

4. Groupe motopompe selon l'une des revendications 1 à 3, **caractérisé en ce qu'**au moins une surface de palier (22, 24) du rotor (10) est définie par un coussinet (26, 28) relié au matériau magnétisable, le coussinet (26, 28) étant, de préférence, comprimé avec le matériau magnétisable du rotor (10).

5. Groupe motopompe selon la revendication 3 ou 4, **caractérisé en ce que** dans le groupe motopompe sont disposées des surfaces de palier (18, 20) fixes en un matériau céramique ou en carbone, coopérant avec les surfaces de palier (22, 24) du rotor (10).

6. Groupe motopompe selon l'une des revendications 3 à 5, **caractérisé en ce qu'**une surface de palier (22, 24), agissant en direction radiale, du rotor est aménagée de telle manière qu'à au moins une extrémité axiale de la surface de palier (22, 24), il soit formé un renfoncement annulaire (32, 34) sur la surface périphérique extérieure du rotor (10).

7. Groupe motopompe selon l'une des revendications précédentes, **caractérisé en ce que** sur au moins une face frontale axiale du rotor (10) est disposé un bout d'arbre s'étendant vers l'extérieur depuis la face frontale.

8. Groupe motopompe selon l'une des revendications précédentes, **caractérisé en ce que** le matériau magnétisable est un matériau ferritique.

9. Groupe motopompe selon l'une des revendications précédentes, **caractérisé en ce qu'**au moins un canal de purge (36, 44) s'étendant en direction radiale et/ou en direction axiale, est ménagé dans le rotor (10).

10. Groupe motopompe selon l'une des revendications précédentes, **caractérisé en ce que** sur la surface périphérique extérieure du rotor (10) est ménagée au moins une rainure de purge, qui s'étend, de préférence, sous une forme hélicoïdale sur la surface périphérique du rotor.

11. Groupe motopompe selon l'une des revendications précédentes, **caractérisé en ce que** le moteur d'entraînement est doté d'une gaine (14) en métal inoxydable ou en matière plastique.

12. Groupe motopompe selon la revendication 11, **caractérisé en ce que** la gaine (14) présente sur sa surface périphérique intérieure, une rainure de purge (42) s'étendant, de préférence, sous une forme hélicoïdale.

13. Groupe motopompe selon l'une des revendications précédentes, **caractérisé en ce que** seule la région du rotor (10) placée radialement en vis-à-vis d'un stator (8) du moteur d'entraînement, présente les pôles magnétiques réalisés par magnétisation.

14. Groupe motopompe selon l'une des revendications précédentes, **caractérisé en ce que** le rotor (10) présente, de préférence à une extrémité axiale (16), un pôle magnétique d'un capteur de position angulaire, produit par magnétisation du matériau magnétisable.

15. Groupe motopompe selon l'une des revendications précédentes, **caractérisé en ce que** le rotor (10) présente un diamètre extérieur constant sur sa longueur axiale entière.
